# EUROPEAN PATENT SPECIFICATION

(11) **EP 4 059 669 B1**
(45) Date of publication and mention of the grant of the patent: **05.07.2023**
(21) Application number: 22161396.1
(22) Date of filing: 10.03.2022
(51) Int. Cl.: B25J 9/00, B25J 11/00, B65B 5/10, B65B 65/00

(54) **A GRIPPING DEVICE FOR AT LEAST ONE PACKET OF PASTA AND AN APPARATUS FOR DISTRIBUTING AT LEAST ONE PACKET OF PASTA**
EINE GREIFVORRICHTUNG FÜR MINDESTENS EIN NUDELPAKET UND EINE VORRICHTUNG ZUM VERTEILEN MINDESTENS EINES NUDELPAKETS
UN DISPOSITIF DE PRÉHENSION POUR AU MOINS UN PAQUET DE PÂTES ET UN APPAREIL POUR DISTRIBUER AU MOINS UN PAQUET DE PÂTES

(30) Priority: 17.03.2021 IT 202100006326
(43) Date of publication of application: 21.09.2022
(73) Proprietor: Pastificio Donato Campioni di Adriano Campioni E C. S.N.C., 20062 Cassano d'Adda Milano (IT)
(72) Inventor: GIOVANARDI, Giovanni, 20062 Cassano d'Adda (IT); CAMPIONI, Alberto, 20062 Cassano d'Adda (IT)
(74) Representative: Lissandrini, Marco

(56) References cited:
- EP-A1- 3 597 377
- WO-A1-2015/121668
- CA-A1- 2 426 057
- US-A- 4 199 050
- US-A1- 2009 320 417

## Description

The present invention relates to a gripping device for at least one product, preferably a packet of pasta, an apparatus for distributing at least one product, preferably a packet of pasta, and a method for distributing at least one product, preferably a packet of pasta.

In other words, the present invention relates to the technical field of the sorting systems of the product flows generated within a production line and, in particular, of the sorting of such products to operating stations from upstream to downstream the production line.

By way of non-limiting example, the present invention finds wide application within the production lines belonging to the pasta sector.

In particular, the present invention can be efficiently used in the downstream portion of the production line of a packaging machine.

For example, the present invention can be applied in the portion of a production line of a pasta factory interposed between a packaging machine and a cartoning machine so as to adjust the supply of the packets of pasta, previously packaged by the packaging machine, to the cartoning machine to make the secondary packaging of the product. Sorting devices are present on the market today, for example summing systems, which allow to sort a plurality of product flows coming from respective packaging machines in a reduced number of product flows each of which directed to a specific cartoning machine.

US2009/320417, US4199050, CA2 426057, WO2015/121668, EP3597377 represent examples of the prior art of grippers in food industry.

The most efficient devices allow to sort three product flows from the packaging machines into two product flows directed to the filling machines of the cartoning machine.

In other words, such apparatuses divide the third flow over the two remaining flows.

Disadvantageously, an increase in the number of flows from the packaging machines is incompatible with the mechanical capacities of sorting the products of the apparatus (for a long pasta packaging line such a limit is about 120 packets per minute per single flow), reducing the production efficiency.

The two outgoing flows from the summing system arrive by means of respective conveyors to a respective filling machine

In particular, the filling machines receive the secondary packaging from the same forming machine.

Disadvantageously, the operating costs (also caused by the increase in the complexity of the system which can be reflected in an increase in machine downtime and maintenance times) and the increase in overall dimensions result in the need to use a single forming machine to provide secondary packaging to the two filling machines.

Disadvantageously, moreover, the possible blocking of one of the two filling machines, and therefore of one of the two cartoning lines, results in the need to recover all the products arranged on the conveyor which leads from the summing apparatus to the same blocked filling machine, causing an increase in the costs of the production process caused by the need for trained labour and the inevitable machine shutdown.

Furthermore, blocking such a line not only implies the need to stop the product flow from one of the packaging machines, but also the need to stop a second flow of the three as the sorting apparatus and the filling machine itself are not able to take charge of the entire flow of products generated by the sum of the two remaining flows.

In other words, due to the impossibility of an instantaneous regulation of the flow of products upstream of the sorting apparatus, the production volume can undergo a reduction of up to one third with respect to the normal production cycle.

Such apparatuses can comprise pusher filling systems configured to simultaneously move a plurality of products, for example a plurality of layers of pasta packets overlapped to form the so-called "bundle", from an accumulation station to the containment volume defined by the secondary packaging.

Disadvantageously, the pusher systems exhibit strong functional limits during the movement of packs, for example small packets of long pasta (e.g., packets of less than 300 grams of long pasta), provided with reduced dimensions transverse to the thrust application direction, causing the crushing of the packets resulting in deterioration of the product and/or a deterioration of the same packet, for example by tearing or damage to the prints.

Alternatively, some apparatuses comprise a plurality of manipulators each of which is configured to individually pick up the products arranged on a conveyor coming from a respective packaging machine and arrange them, at a respective cartoning station, inside the secondary packaging.

In particular, such manipulators generally comprise suction-cup gripping means adapted to constrain the product to the manipulator. Disadvantageously, due to the inevitable tolerances between the theoretical gripping point and the actual gripping point, the grip of the product is often inaccurate and is reflected in a subsequent inaccurate positioning inside the secondary packaging.

In fact, the relative sliding between the suction cup and the packet generates uncertainty regarding the actual gripping point on the packet. Furthermore, the need to move the products individually results in high movement rhythms of the manipulators with a consequent increase in operating costs and a reduction in the average operating life of the single manipulator.

Disadvantageously, moreover, the need for a manipulator for each individual conveyor causes the occurrence of high dimensions with a consequent increase in the fixed costs of the production plant and problems related to the movement volumes of the manipulators themselves.

In this context, the technical task underlying the present invention is to propose a gripping device for at least one product, preferably a packet of pasta, an apparatus for distributing at least one product, preferably a packet of pasta, and a method for distributing at least one product, preferably a packet of pasta which overcome the aforementioned drawbacks of the prior art.

In particular, it is an object of the present invention to provide a gripping device for at least one product, preferably a packet of pasta, an apparatus for distributing at least one product, preferably a packet of pasta, and a method for distributing at least one product, preferably a packet of pasta which allow to simplify the distribution and sorting operations of the products within a production line.

A further object of the present invention is to provide a gripping device for at least one product, preferably a packet of pasta, an apparatus for distributing at least one product, preferably a packet of pasta, and a method for distributing at least one product, preferably a packet of pasta, having an increased operational flexibility with respect to the devices of the prior art.

Furthermore, it is a further object of the present invention to provide a gripping device for at least one product, preferably a packet of pasta, an apparatus for distributing at least one product, preferably a packet of pasta, and a method for distributing at least one product, preferably a packet of pasta, capable of increasing the operational efficiency of the packaging process.

A further object of the present invention is to provide a gripping device for at least one product, preferably a packet of pasta, an apparatus for distributing at least one product, preferably a packet of pasta, and a method for distributing at least one product, preferably a packet of pasta, capable of reducing the operating costs related to the packaging process. A further object of the present invention is to provide a gripping device for at least one product, preferably a packet of pasta, an apparatus for distributing at least one product, preferably a packet of pasta, and a method for distributing at least one product, preferably a packet of pasta, capable of simplifying the secondary packaging process within a production line, for example during the steps of packaging packets of pasta.

The specified technical task and the specified objects are substantially achieved by a gripping device for at least one product, preferably a packet of pasta, an apparatus for distributing at least one product, preferably a packet of pasta, and a method for distributing at least one product, preferably a packet of pasta, comprising the technical features set out in one or more of the appended claims.

The dependent claims correspond to different possible embodiments of the invention.

Further features and advantages of the present invention will become more apparent from the following indicative and therefore non-limiting description
of a preferred but not exclusive embodiment of a gripping device for at least one product, preferably a packet of pasta, an apparatus for distributing at least one product, preferably a packet of pasta, and a method for distributing at least one product, preferably a packet of pasta, as illustrated in the accompanying drawings in which:
- figures 1A-1C are perspective views in respective operating configurations of a gripping device for at least one packet of long dried pasta according to a possible embodiment of the present invention;
- figures 1D-1E are side views in respective operating configurations of a gripping device for at least one packet of long dried pasta according to a possible embodiment of the present invention;
- figure 2 is a perspective view of an apparatus for distributing at least one product, preferably a packet of pasta, in accordance with a possible embodiment of a further aspect of the present invention;
- figure 3 is a top view of the apparatus for distributing at least one product, preferably a packet of pasta of figure 2;

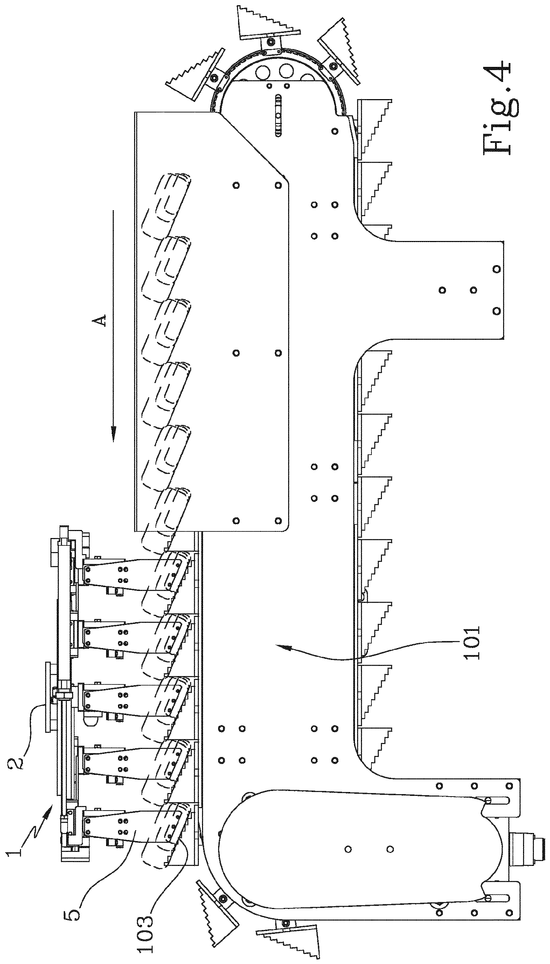

- figure 4 is a side view of a portion of the apparatus for distributing at least one product, preferably a packet of pasta of figure 2.

With reference to the accompanying drawings, the reference number 1 has been used to generally designate a gripping device for at least one packet of long dried pasta, which will be referred to herein as gripping device 1.

In the present discussion, the term "dried pasta" refers to a type of pasta, generally produced industrially, which undergoes a drying process during the production process.

Furthermore, the term "long pasta" refers to a type (or shape) of pasta which extends mainly along a main extension direction.

Preferably, the term "packet of long dried pasta" indicates, in the present discussion, a food product comprising a plurality of individual elements of long dried pasta and an envelope adapted to contain the plurality of elements of long dried pasta arranged so that the respective main extension directions are substantially parallel to each other.

In other words, the packet of pasta preferably extends along a main extension axis substantially parallel to the aforementioned main extension directions of the long dried pasta elements.

Preferably, the envelope is made of a loose material, for example a polymer film, adapted to conform to the dimensions defined by the plurality of pasta elements contained therein.

In other words, the envelope constitutes the so-called primary packaging for long dried pasta.

In particular, the packet of pasta can define two opposite end portions, or head portions, at the ends of the pasta elements and a central portion interposed at the end portions.

Advantageously, the gripping device 1 is configured to constrain at least one packet "P" of pasta to movement means so as to allow a movement thereof between a plurality of operating positions.

In particular, the gripping device 1 comprises a support portion 2 adapted to connect the gripping device 1 to the aforementioned movement means. By way of non-limiting illustration, the movement means can comprise manipulator devices, for example delta robots, Cartesian manipulators, pickers, anthropomorphic robotic arms, scara robots and/or the like.

In other words, the gripping device 1 can be connected to one of the aforementioned manipulators to allow a movement of the packet between the aforementioned plurality of operating positions.

The gripping device 1 further comprises at least a first blocking portion 3 and at least a second blocking portion 4.

Preferably, the first blocking portion 3 and the second blocking portion 4 are connected to the support portion 2 and opposite each other.

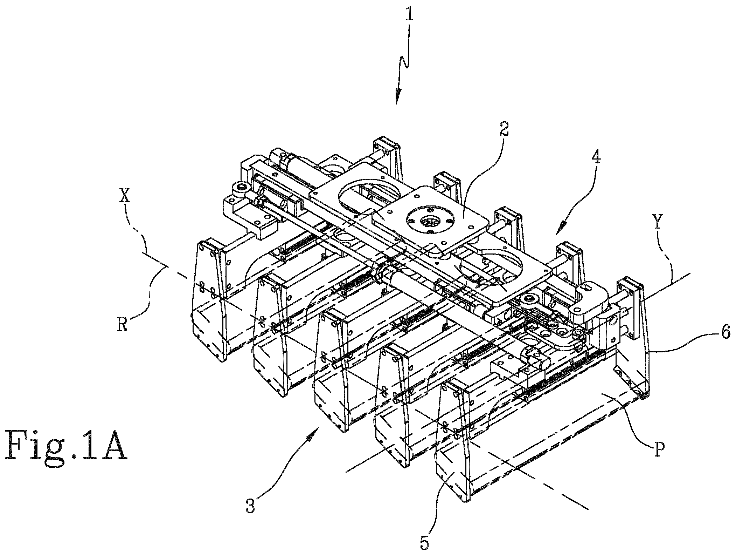

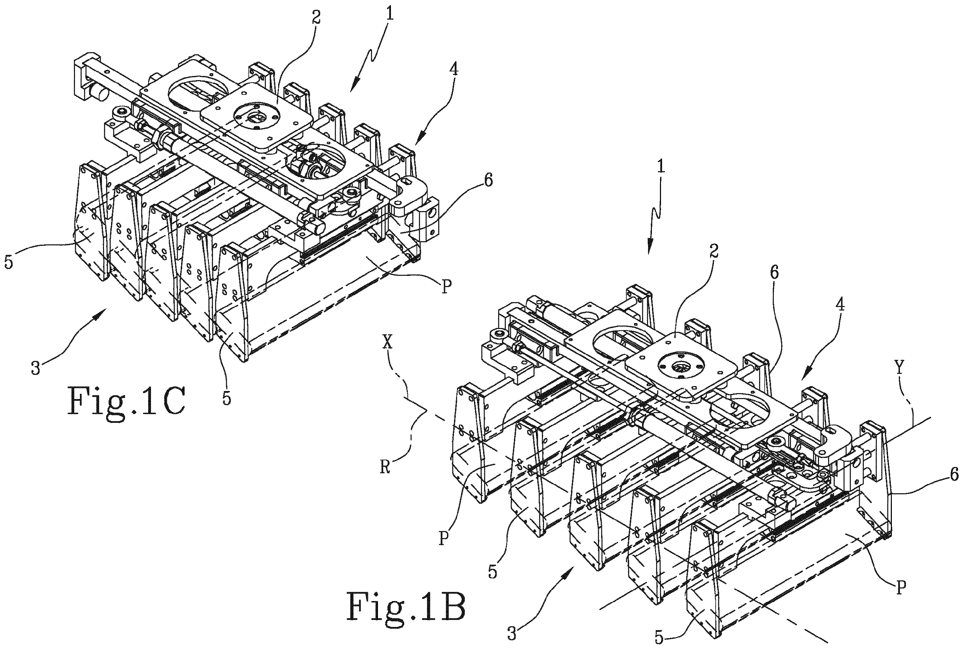

The first blocking portion 3 and the second blocking portion 4 are reversibly movable closer and farther away along a movement direction "Y" between a gripping position (figure 1A), in which the first blocking portion 3 and the second blocking portion 4 are arranged at a first distance so that they abut against the respective opposite head portions of the packet to constrain the packet to the gripping device 1, and a release position (figure 1B), in which the first blocking portion 3 and the second blocking portion 4 are arranged at a second distance greater than the first distance.

In other words, during the passage from the gripping position (figure 1A) to the release position (figure 1B), the first blocking portion 3 and/or the second blocking portion 4 are distanced from each other so that the first blocking portion 3 and/or the second blocking portion 4 are not arranged abutted against the head portions of the packet "P" of pasta, allowing a release of the packet "P" of pasta.

Preferably, the first blocking portion 3 and/or the second blocking portion 4 are mutually translatable and/or rotatable with respect to the support portion 2.

In accordance with a possible, purely illustrative and non-limiting embodiment of the present invention, the first blocking portion 3 and the second blocking portion 4 are connected to the support portion 2 so as to be arranged facing and opposite each other with respect to the support portion 2 itself. Furthermore, the first blocking portion 3 and the second blocking portion 4 can be rotatable with respect to the support portion 2 to at least partially carry out a preferably reversible movement between the gripping position (figure 1A) and the release position (figure 1B). In particular, the first blocking portion 3 and the second blocking portion 4 can be rotatable with respect to a rotation axis "R" which is transverse, preferably perpendicular, to the movement direction "Y".

Advantageously, the first blocking portion 3 and the second blocking portion 4 can be movable symmetrically and/or simultaneously to release the head portions of the packet of pasta at the same time, limiting, preferably preventing, the occurrence of moments due to the friction forces which can determine an accidental movement of the packet of pasta after the release.

Thereby, the gripping device 1 ensures a high positioning accuracy of the product with respect to the movement means, overcoming the inaccuracies due to the inevitable dimensional tolerances which must be considered using suction-cup gripping devices.

Preferably, the movement direction "Y" is parallel to the main extension axis of the packet "P" of pasta at least in the gripping position of the first blocking portion 3 and the second blocking portion 4.

In accordance with a possible embodiment and as illustrated in the accompanying drawings, the first blocking portion 3 and the second blocking portion 4 can be respectively defined by a plurality of first blocking elements 5 and second blocking elements 6.

Preferably, each of the first blocking elements 5 is arranged opposite a respective second blocking element 6 with respect to the movement direction.

In particular, each of the first blocking elements 5 is operatively connected to a respective second blocking element 6 to pick up and release at least one packet "P" of pasta, preferably a respective packet "P" of pasta.

Thereby, the first blocking portion 3 and the second blocking portion 4 allow to simultaneously constrain to the gripping device 1 a plurality of packets "P" of pasta, increasing the operational flexibility of the gripping device 1 and allowing a reduction, with respect to the systems of the prior art, of the movements which the movement means must perform to move a given quantity of packets "P" of pasta.

In other words, at least a first blocking element 5 and at least a second blocking element 6 are reversibly movable closer and farther away along a respective movement direction, preferably parallel and/or coinciding with the movement direction "Y", between a gripping position, in which the first blocking element 5 and the second blocking element 6 are arranged at a first distance so that they abut against respective opposite head portions of the packet to constrain the packet to the gripping device 1, and a release position (figure 1B), in which the first blocking element 5 and the second blocking element 6 are arranged at a second distance greater than the first distance.

Preferably, each of the first blocking elements 5 and each of the second blocking elements 6 are reversibly movable closer and farther away along the respective movement directions between respective gripping positions (figure 1A) and respective release positions (figure 1B).

In accordance with a possible embodiment of the present invention purely by way of non-limiting example, each of the first blocking elements 5 and/or each of the second blocking elements 6 is reversibly movable along a respective movement direction "Y" autonomously and/or independently from the movement of the remaining first blocking elements 5 and/or second blocking elements 6.

In other words, the first blocking elements 5 and/or the second blocking elements 6 can be reversibly movable along a respective movement direction "Y" in a mutually independent and selective manner.

According to further possible embodiments of the present invention, the first blocking elements 5 and/or the second blocking elements 6 can be moved in a manner at least partially dependent on each other in order to optimise the use of the actuating means used to carry out the movement thereof.

Furthermore, the first blocking elements 5 and/or the second blocking elements 6 can be reversibly rotatable with respect to the support portion 2 with respect to a respective rotation axis "R" which is transverse, preferably perpendicular, to the movement direction "Y" to at least partially perform a reversible movement between the respective gripping positions (figure 1A) and the respective release positions (figure 1B).

In particular, the respective movement directions of the first blocking elements 5 and of the second blocking elements 6 can be parallel to the main extension axis of the packet "P" of pasta at least during a gripping position.

According to a possible embodiment of the present invention, each of the first blocking elements 5 and/or each of the second blocking elements 6 is reversibly rotatable with respect to the support portion 2 with respect to a respective rotation axis "R" which is transverse, preferably perpendicular, to the movement direction "Y" autonomously and/or independently of the movement of the remaining first blocking elements 5 and/or second blocking elements 6.

In other words, each of the first blocking elements 5 and/or each of the second blocking elements 6 can be selectively rotatable with respect to a respective rotation axis "R" in a reversible manner.

According to further possible embodiments of the present invention, the first blocking elements 5 and/or the second blocking elements 6 are rotatable in a manner at least partially dependent on each other in order to optimise the use of the actuating means used to carry out the rotation thereof.

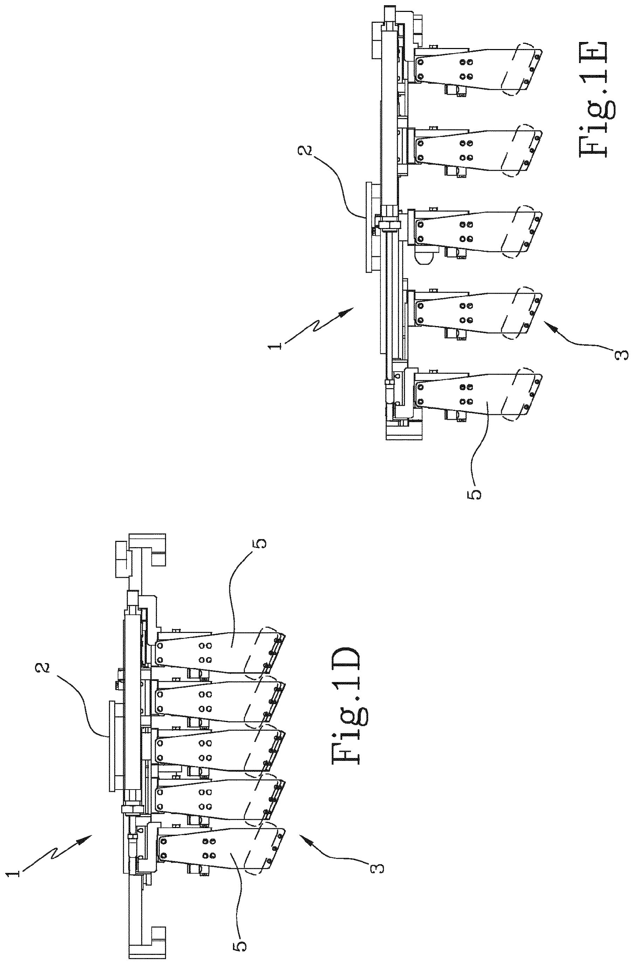

In accordance with a possible embodiment of the present invention, the first blocking elements 5 and/or the second blocking elements 6 are, moreover, reversibly movable along a direction "X" which is transverse, preferably perpendicular, to the movement direction "Y" between a mutual approaching configuration (figures 1C, 1D) and a mutual distancing configuration (figures 1A, 1E).

Furthermore, the first blocking elements 5 and/or the second blocking elements 6 can be reversibly rotatable with respect to the support portion 2 around an axis preferably parallel and/or coinciding with the respective movement direction "Y".

Thereby, the first blocking elements 5 and/or the second blocking elements 6 can allow a mutual approaching and/or distancing of the packets "P" of pasta constrained to the gripping device 1.

In accordance with a purely descriptive and non-limiting embodiment of the present invention, such a movement can allow a plurality of packets "P" of pasta to be approached so as to facilitate the insertion thereof inside a secondary packaging.

For example, such a movement can allow the packets "P" of pasta to be approached so as to create a filling layer of a secondary packaging.

In the present discussion, the term "secondary packaging" refers to packaging, for example a cardboard box, adapted to group a plurality of individual products already provided with a primary packaging, for example a packet "P" of pasta.

According to some possible, purely exemplary and non-limiting embodiments of the present invention, each of the first blocking elements 5 and/or each of the second blocking elements 6 can be reversibly movable along the aforementioned direction "X" and/or can be reversibly rotatable with respect to the support portion 2 around an axis preferably parallel and/or coinciding with the respective movement direction "Y" autonomously and/or independently of the movement of the remaining first blocking elements 5 and/or second blocking elements 6.

In other words, each of the first blocking elements 5 and/or each of the second blocking elements 6 can be selectively movable along the direction "X" and/or can be selectively rotatable with respect to the support portion 2 around an axis substantially parallel and/or coinciding with the aforementioned movement direction "Y".

According to further possible embodiments of the present invention, the first blocking elements 5 and/or the second blocking elements 6 can be moved along the aforementioned direction "X" and/or can be reversibly rotatable with respect to the support portion 2 around an axis preferably parallel and/or coinciding with the respective movement direction "Y" in a manner at least partially dependent on each other in order to optimise the use of the actuating means used to carry out the movement thereof. Advantageously, the first blocking portion 3 (and/or the first blocking elements 5) and/or the second blocking portion 4 (and/or the second blocking elements 6) can have a substantially planar shape extending transversely, preferably perpendicularly, to the movement direction "Y" so as to allow an introduction of the packets "P" of pasta inside the secondary packaging, limiting the service volume needed by the first blocking portion 3 (and/or the first blocking elements 5) and/or the second blocking portion 4 (and/or the second blocking elements 6) for the deposit and release of the packets "P" of pasta.

Thereby, the first blocking portion 3 (and/or the first blocking elements 5) and/or the second blocking portion 4 (and/or the second blocking elements 6) can be adapted to release the packets "P" of pasta near the opening of the secondary packaging and/or to deposit the packets "P" inside the secondary packaging.

In particular, the limited service volume needed by the first blocking portion 3 (and/or the first blocking elements 5) and/or the second blocking portion 4 (and/or the second blocking elements 6) for the deposit and release of the packets "P" of pasta allows, very advantageously, the use of smaller secondary packaging, for example defining an opening for the insertion of the product a few millimetres wider than the length of the packet "P" of pasta, with the consequent reduction of the costs of the secondary packaging and reduction of the volume occupied by the secondary packaging itself, resulting in an operational efficiency and a decrease in costs both during transport and during storage.

According to a purely illustrative and non-limiting possible embodiment, the first blocking portion 3 (and/or the first blocking elements 5) and/or the second blocking portion 4 (and/or the second blocking elements 6) can be at least partially made of aluminium and/or an aluminium-containing alloy. Advantageously, the first blocking portion 3 (and/or the first blocking elements 5) and/or the second blocking portion 4 (and/or the second blocking elements 6) can be made at least partially of an aluminium alloy of the series 7000, for example the aluminium alloy marketed under the trade name Ergal°, so as to ensure high mechanical strength to the gripping device 1.

In accordance with further possible embodiments, the first blocking portion 3 (and/or the first blocking elements 5) and/or the second blocking portion 4 (and/or the second blocking elements 6) can be made at least partially of materials different from those mentioned above, for example comprising polymeric materials and/or different types of metal, without altering the inventive concept underlying the present invention.

Furthermore, the first blocking portion 3 (and/or the first blocking elements 5) and/or the second blocking portion 4 (and/or the second blocking elements 6) can comprise increased friction coefficient portions, for example defined by a particular surface texture and/or obtained by the use of rubberised bodies, to increase the effectiveness of the constraint with the packet "P" of pasta in the gripping position of the first blocking portion 3 and the second blocking portion 4.

For example, the first blocking elements 5 and/or the second blocking elements 6 can have polymer coatings, for example comprising polyurethane.

According to further embodiments, such increased friction coefficient portions can be not included without the inventive concept underlying the present invention being altered.

According to a possible embodiment of the present invention not illustrated in the accompanying drawings, the gripping device 1 can further comprise pneumatic gripping means which is reversibly activatable on the packet to constrain it to the same gripping device 1.

Preferably, such pneumatic means comprises at least one suction cup activatable on the packet "P" of pasta, even more preferably, at the aforementioned central portion.

Advantageously, the gripping device 1 can comprise detection means (not illustrated in the accompanying drawings), for example comprising at least one acceleration sensor and/or a force sensor and/or a distance sensor and/or a photocell, adapted to generate at least one signal representative of at least one operating parameter of the gripping device 1.

For example, such sensors can provide signals representative of the interaction between the first blocking portion 3 (and/or the first blocking elements 5) and/or the second blocking portion 4 (and/or the second blocking elements 6) with the packet "P" of pasta in order to obtain an optimisation of the movement of the gripping device 1.

In particular, such detection means can be connected to an external management unit adapted to process the aforementioned at least one signal and, preferably, operate the gripping device 1 according to the at least one signal and a predetermined logic.

In accordance with a further aspect, the present invention refers to an apparatus 100 for distributing at least one product, in particular a packet "P" of long dried pasta, comprising at least one feed conveyor 101 configured to move at least one product along a feeding path "A". Preferably, the at least one feed conveyor 101 is operatively connected or connectable to a packaging machine to receive at least one packet "P" of pasta, preferably a flow of packets "P" of pasta.

In accordance with a possible embodiment and as illustrated in the accompanying drawings, the apparatus 100 comprises a plurality of feed conveyors 101 configured to move at least one respective product along a respective feeding path "A".

Advantageously, such feed conveyors 101 can be mutually juxtaposed and/or define feeding paths "A" which are at least partially parallel so as to reduce the volumetric dimensions induced within the operating environment.

Preferably, the feed conveyor 101 comprises a plurality of support elements 102.

In particular, each support element 102 can be shaped to supportingly receive a respective product to be moved along the feeding path "A".

In accordance with a possible embodiment and as illustrated in the accompanying drawings, the support elements 102 are shaped to supportingly receive a packet "P" of pasta so that the main extension axis of the packet "P" of pasta is transverse, preferably perpendicular, to the feeding path "A".

Advantageously, each support element 102 can define a respective support plane 103 which is inclined with respect to the feeding path "A".

In particular, the support planes 103, defined by the plurality of support elements 102, are mutually parallel defining a sawtooth profile of the feed conveyor 101 so as to simplify the gripping and releasing procedures as will be described in detail below.

Furthermore, the inclined support planes 103 allow to increase the number of products arranged on the conveyor 101 and, at the same time, allow to vary the size of the product, preferably the packet "P" of pasta (for example passing from a packet "P" of pasta from 250 grams to one of 500 grams or vice versa), without the need for machine stops due to the changes in operating parameters.

The apparatus 100 further comprises at least one packaging conveyor 104 configured to move at least one secondary packaging "S", preferably a carton, along a packaging path "B", of the packaging conveyor 104.

In accordance with a possible embodiment and as illustrated in the accompanying drawings, the packaging path "B" is substantially parallel and in the opposite direction with respect to the feeding path "A", helping to reduce the dimensions defined by the apparatus 100 within the operating environment.

Furthermore, the apparatus 100 comprises movement means 105 adapted to move the at least one product, preferably at least one packet "P" of pasta, between the feed conveyor 101 and the packaging conveyor 104 at at least one filling station 1000 defined along the packaging path "B". Preferably, the movement means 105 can comprise manipulator devices, for example delta robots, Cartesian manipulators, pickers, anthropomorphic robotic arms, scara robots and/or the like.

The apparatus 100 further comprises at least one gripping device configured to pick up the at least one product from the feed conveyor 101 and release the at least one product inside the secondary packaging "S". In other words, the movement means 105 can move the at least one gripping device between the feed conveyor 101 and the packaging conveyor 104, preferably to pick up at least one product at at least one gripping station 1001 defined along the feeding path "A" and release it at the at least one filling station 1000 defined along the packaging path "B". In particular, the positioning of the gripping station 1001 can be variable along the feeding path "A" as a function of a plurality of different operating parameters, for example the positioning of the movement means 105 and/or of the secondary packaging "S" along the packaging path "B".

Advantageously, the gripping device can be a gripping device 1 in accordance with what has been described above.

In particular, the gripping device 1 can be activated simultaneously on a plurality of packets "P" of pasta by constraining them to the movement means 105 so as to determine a reduction, with respect to the systems of the prior art, of the movements which the movement means must perform to move a given quantity of packets "P" of pasta.

Advantageously, the plurality of support elements 102, adapted to support the packets "P" of pasta on the respective support planes 103 with an inclined orientation with respect to the feeding path "A", allows the first blocking portion 3 and the second blocking portion 4 to constrain the packets "P" of pasta to the gripping device 1 so that they are parallel to each other and substantially inclined with respect to the feeding path "A" and, preferably, to a horizontal plane.

Thereby, at the mutual approaching configuration (figure 1C), the first blocking elements 5 and the second blocking elements 6 can define an at least partial overlapping of the packets "P" of pasta, minimising a transverse dimension defined by the plurality of packets "P" of pasta to facilitate a release inside the secondary packaging "S".

In other words, the relative movement along the direction "X" of the first blocking elements 5 and the second blocking elements 6 allows to make, for example during the movement of the plurality of packets "P" of pasta, a layer of the so-called "bundle" of packets "P" of pasta for filling the secondary packaging "S".

In particular, in the present discussion, the term "bundle" means a plurality of overlapping layers of packets of long dried pasta (generally, but not limited to, a number comprised between two and seven packets of long dried pasta), in which each layer is defined by a plurality of packets of long dried pasta (generally, but not limited to, a number comprised between two and seven packets of long dried pasta).

Advantageously, the at least one feed conveyor 101 is configured to produce at least one intermittent-type motion.

Thereby, the feed conveyor 101 can be moved after receiving, on one of the aforementioned support elements 102, a product so as to generate a continuous succession of products arranged on respective support elements 102.

In accordance with a possible embodiment and as illustrated in the accompanying drawings, the apparatus 100 comprises at least one support conveyor 106 configured to move at least one product along a support path "C" between a loading station 1002 and an unloading station 1003.

Preferably, the at least one gripping device 1 is configured to pick up the at least one product, preferably at least one packet "P" of pasta, from the feed conveyor 101 and release the at least one product, preferably at least one packet "P" of pasta, at the loading station 1002 of the support conveyor 106.

Furthermore, the at least one gripping device 1 is configured to pick up the at least one product at the unloading station 1003 of the support conveyor 106 and release the at least one product at the at least one filling station 1000 of the packaging conveyor 104.

Preferably, the support conveyor 106 has a receiving plane 109 adapted to supportingly receive at least one product so that the main extension axis of the product is transverse, preferably perpendicular, to the support path "C".

Furthermore, the support conveyor 106 can comprise a sequence of separator elements 107 arranged along the support path "C" configured to define, with the receiving plane 109, a plurality of containment compartments 108 separated from each other by the separator elements 107.

In particular, each containment compartment 108 is adapted to supportingly receive a given number of products.

Advantageously, the separating elements 107 can be reversibly movable, preferably parallel to the support path "C", according to a mutual approaching and mutual distancing motion to reduce and increase a size of the containment compartments 108 thus allowing to change the number of products, preferably of packets "P" of pasta, which each containment compartment 108 is adapted to receive.

Preferably, the movement means 105 comprises at least a first manipulator 110, connected or connectable to a first gripping device 1, configured to move the at least one product, preferably a plurality of products, from the feed conveyor 101 to the support conveyor 106.

Preferably, moreover, the movement means 105 can comprise at least a second manipulator 111, connected or connectable to a second gripping device 1, configured to move the at least one product, preferably the plurality of products, from the support conveyor 106 to a further support conveyor 106 and/or to the packaging conveyor 104 at the aforementioned at least one filling station 1000.

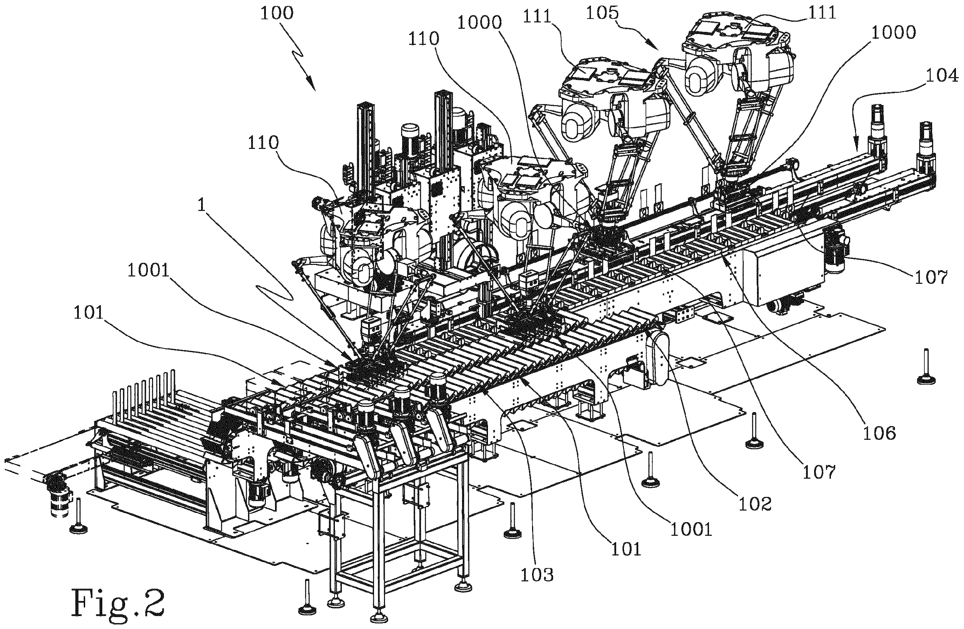

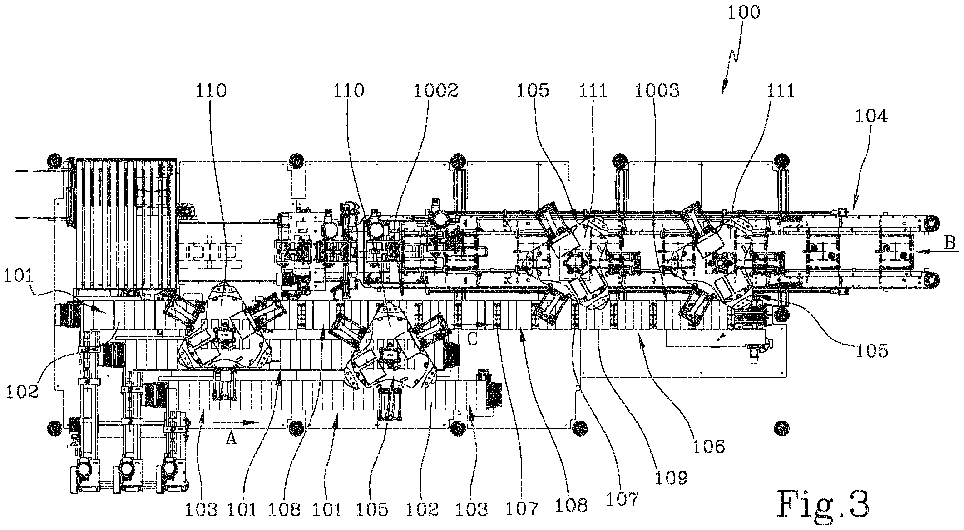

In accordance with a possible embodiment and as illustrated in figures 2-3, the movement means 105 comprises a pair of first manipulators 110 configured to move a plurality of packets "P" of pasta from the feed conveyor 101 to the support conveyor 106 and a pair of second manipulators 111 configured to move a plurality of packets "P" of pasta from the support conveyor 106 to the packaging conveyor 104 at the aforementioned at least one filling station 1000.

Preferably, the packaging path "B" defines a plurality of filling stations 1000 at which the manipulators can release the packets "P" of pasta inside the secondary packaging "S".

Furthermore, the apparatus 100 can comprise a forming unit 112 configured to form the secondary packaging "S".

Such a forming unit 112 can be arranged along the packaging path "B" at a forming station 1004 upstream of the at least one filling station 1000. Furthermore, the apparatus 100 can comprise a closing unit 113 configured to perform a closure of the secondary packaging "S" and arranged along the packaging path "B" at a closing station 1005 downstream of the at least one filling station.

In accordance with a further aspect, the present invention relates to a method for distributing a plurality of products, preferably a plurality of packets of long dried pasta, comprising the steps of feeding a plurality of products along a feeding path "A" and picking up a given quantity of products at a gripping station 1001 of the feeding path "A".

Preferably, at least one step of the steps of the method is at least partially performed with a gripping device 1 and/or with an apparatus 100. Advantageously, the step of feeding a plurality of products along a feeding path "A" can be performed by feeding the plurality of products intermittently along the feeding path.

Thereby, the method allows to generate a continuous succession of products, facilitating the step of picking up a given quantity of products. Preferably, the step of picking up a given quantity of products is carried out by picking up a number of products, preferably packets "P" of pasta, comprised between two and seven.

In accordance with a possible embodiment of the present invention, the step of picking up a given quantity of products includes picking up a given quantity of packets "P" of pasta by means of at least one pair, preferably a plurality of pairs, of blocking elements adapted to abut opposite head portions of the same respective packet "P" of pasta.

Preferably, the method comprises a step of substantially simultaneously picking up the given quantity of products at the gripping station 1001 of the feeding path "A".

Furthermore, the method comprises the step of feeding at least a secondary packaging "S", preferably a preformed cardboard box, along a packaging path "B".

In particular, the packaging path defines at least one filling station 1000, preferably a plurality of filling stations 1000.

Furthermore, the method comprises the steps of moving the given quantity of products at least between the gripping station 1001 and the filling station 1000 and the step of releasing the given quantity of products inside the secondary packaging "S" at the at least one filling station 1000.

In particular, the step of releasing the given quantity of products can be carried out by depositing the products inside the secondary packaging "S" and/or releasing them near an access opening of the secondary packaging "S" so that, under the action of the force of gravity or appropriate ejection devices, they are arranged inside the secondary packaging "S".

Advantageously, the method can comprise a step of approaching, preferably at least partially overlapping, the products of the given quantity of products to form a filling layer for a secondary packaging.

Thereby, the method allows the size of the layer to be adjusted so that they are compatible with those of the secondary packaging.

In particular, such an approaching step, preferably at least partially overlapping the products of the given quantity of products can be carried out during the step of moving the given quantity of products at least between the gripping station 1001 and the filling station 1000.

Thereby, the method allows to make, during the movement of a given amount of packets "P" of pasta, a layer of the so-called "bundle" of packets "P" of pasta for filling the secondary packaging "S".

Preferably, the method further comprises the step of feeding at least the given quantity of products along a support path "C" from a loading station 1002 to an unloading station 1003.

Furthermore, the step of moving the given quantity of products at least between the gripping station 1001 and the filling station 1000 can comprise the sub-step of releasing the given quantity of products at the loading station 1002, the sub-step of picking up the given quantity of products from the unloading station 1003, and/or the sub-step of moving the at least one product from the unloading station 1003 to the filling station 1000.

Preferably, the method comprises a step of substantially simultaneously releasing a plurality of products at the loading station 1002.

Furthermore, the method can comprise a step of substantially simultaneously picking up a plurality of products at the unloading station 1003 of the support path "C".

It is thus noted that the present invention achieves the proposed objects by making a gripping device for at least one product, preferably a packet of pasta, an apparatus for distributing at least one product, preferably a packet of pasta, and a method for distributing at least one product, preferably a packet of pasta capable of simplifying the distribution and sorting operations of the products within a production line by virtue of the presence of at least one feed conveyor, at least one configured packaging conveyor and movement means adapted to move at least one gripping device between the feed conveyor and the packaging conveyor to pick up at least one product from the feed conveyor and release it inside the secondary packaging.

Advantageously, the gripping device ensures a high positioning accuracy of the product with respect to the movement means, overcoming the inaccuracies due to the inevitable dimensional tolerances which must be considered using only pneumatic gripping devices.

Advantageously, the present invention allows, by virtue of the presence of a plurality of substantially independent conveyors, to increase the number of product flows from the packaging machines, increasing the production efficiency.

Advantageously, the present invention ensures a reduction of the dimensions, allowing to use a single forming machine for forming the secondary packaging necessary for the products coming from a plurality of packaging machines.

Furthermore, very advantageously, it overcomes the need for machine stoppages imposed by any failure of one of the filling machines by virtue of the presence of a plurality of manipulators which ensure the continuation of the filling operations of the secondary packaging.

## Claims

1. A gripping device for at least one packet (P) of long dried pasta comprising:
- a support portion (2) adapted to connect said gripping device (1) to movement means to move at least one packet between a plurality of operating positions;
- at least a first blocking portion (3) and at least a second blocking portion (4) reversibly movable closer and farther away along a movement direction (Y) parallel to a main extension axis of the packet between a gripping position, in which said at least a first blocking portion (3) and at least a second blocking portion (4) are arranged at a first distance so as to abut against respective opposite head portions of the packet to constrain the packet to the gripping device (1),
and a release position, in which said at least a first blocking portion (3) and at least a second blocking portion (4) are arranged at a second distance greater than said first distance;
wherein said first blocking portion (3) and said second blocking portion (4) are respectively defined by a plurality of first blocking elements (5) and second blocking elements (6), each of said first blocking elements (5) being arranged opposite a respective second blocking element with respect to said movement direction (Y);
**characterised in that** said first blocking elements (5) and/or said second blocking elements (6) are reversibly movable along a direction (X) which is transverse, preferably perpendicular, to said movement direction (Y) between a mutual approaching configuration and a mutual distancing configuration.

2. The gripping device according to one or more of the preceding claims, comprising a pneumatic gripping means which is reversibly activatable on the packet to constrain it to said gripping device (1).

3. The gripping device according to one or more of the preceding claims, wherein said first blocking elements (5) and/or said second blocking elements (6) are reversibly movable along a respective movement direction (Y) in a mutually independent and/or selective manner.

4. The gripping device according to one or more of the preceding claims, wherein each of said first blocking elements (5) and/or each of said second blocking elements (6) is selectively rotatable with respect to said support portion (2) with respect to a respective rotation axis (R) which is transverse, preferably perpendicular, to the movement direction (Y) in a reversible manner.

5. The gripping device according to one or more of the preceding claims, wherein each of said first blocking elements (5) and/or each of said second blocking elements (6) is selectively movable along said direction (X).

6. The gripping device according to one or more of the preceding claims, wherein said first blocking elements (5) and/or said second blocking elements (6) are reversibly rotatable with respect to the support portion (2) around an axis substantially parallel to said movement direction (Y).

7. The gripping device according to claim 6, wherein each of the first blocking elements (5) and/or each of the second blocking elements (6) is selectively rotatable with respect to said support portion (2) around an axis substantially parallel to said movement direction (Y).

8. The gripping device according to one or more of the preceding claims, wherein said first blocking portion (3) and/or said first blocking elements (5) and/or said second blocking portion (4) and/or said second blocking elements (6) are at least partially made of aluminium and/or an aluminium-containing alloy.

9. The gripping device according to one or more of the preceding claims, wherein said first blocking portion (3) and/or said first blocking elements (5) and/or said second blocking portion (4) and/or said second blocking elements (6) are at least partially made of an aluminium alloy of the series 7000, for example Ergal^{®}.

10. The gripping device according to one or more of the preceding claims, wherein said first blocking elements (5) and/or said second blocking elements (6) comprise portions with increased friction coefficient activatable on the packet (P).

11. The gripping device according to one or more of the preceding claims, comprising detecting means, preferably comprising at least one acceleration sensor and/or a force sensor and/or a distance sensor and/or a photocell, adapted to generate at least one signal representative of at least one operating parameter of said gripping device (1).

## Patentansprüche

1. Greifvorrichtung für mindestens ein Paket (P) langer getrockneter Nudeln, umfassend:
- einen Halterungsabschnitt (2), der ausgelegt ist, um die Greifvorrichtung (1) mit Bewegungsmitteln zu verbinden, um mindestens ein Paket zwischen einer Vielzahl von Betriebspositionen zu bewegen;
- mindestens einen ersten Festspannabschnitt (3) und mindestens einen zweiten Festspannabschnitt (4), die reversierbar entlang einer Bewegungsrichtung (Y), die parallel zu einer Hauptausdehnungsachse des Pakets zwischen einer Greifposition, in der der mindestens eine erste Festspannabschnitt (3) und mindestens ein zweiter Festspannabschnitt (4) an einem ersten Abstand angeordnet sind, sodass sie gegen jeweilige entgegengesetzte Kopfabschnitte des Pakets anschlagen, um das Paket an der Greifvorrichtung (1) festzuklemmen, und einer Freigabeposition, in der der mindestens eine erste Festspannabschnitt (3) und mindestens ein zweiter Festspannabschnitt (4) an einem zweiten Abstand angeordnet sind, der größer ist als der erste Abstand, in Annäherung und wegführend bewegbar sind,
wobei der erste Festspannabschnitt (3) und der zweite Festspannabschnitt (4) jeweils durch eine Vielzahl erster Festspannelemente (5) und zweiter Festspannelemente (6) definiert sind, wobei ein jedes der ersten Festspannelemente (5) gegenständig zu einem jeweiligen zweiten Festspannelement in Bezug auf die Bewegungsrichtung (Y) angeordnet ist,
**dadurch gekennzeichnet, dass** die ersten Festspannelemente (5) und/oder die zweiten Festspannelemente (6) reversierbar entlang einer Richtung (X), die quer, vorzugsweise senkrecht, zur Bewegungsrichtung (Y) verläuft, zwischen einer Auslegung des gegenseitigen Annäherns und einer Auslegung des gegenseitigen Entfernens bewegbar sind.

2. Greifvorrichtung nach einem oder mehreren der vorhergehenden Ansprüche, umfassend pneumatische Greifmittel, die reversierbar auf dem Paket aktivierbar sind, um dieses an der Greifvorrichtung (1) festzuklemmen.

3. Greifvorrichtung nach einem oder mehreren der vorhergehenden Ansprüche, wobei die ersten Festspannelemente (5) und/oder die zweiten Festspannelemente (6) reversierbar entlang einer jeweiligen Bewegungsrichtung (Y) auf eine gegenseitige voneinander unabhängige und/oder selektive Weise bewegbar sind.

4. Greifvorrichtung nach einem oder mehreren der vorhergehenden Ansprüche, wobei ein jedes der ersten Festspannelemente (5) und/oder ein jedes der zweiten Festspannelemente (6) selektiv in Bezug auf den Halterungsabschnitt (2) in Bezug auf eine jeweilige Rotationsachse (R), die quer, vorzugsweise senkrecht, zur Bewegungsrichtung (Y) verläuft, auf reversierbare Weise drehbar ist.

5. Greifvorrichtung nach einem oder mehreren der vorhergehenden Ansprüche, wobei ein jedes der ersten Festspannelemente (5) und/oder ein jedes der zweiten Festspannelemente (6) selektiv entlang der Richtung (X) bewegbar ist.

6. Greifvorrichtung nach einem oder mehreren der vorhergehenden Ansprüche, wobei die ersten Festspannelemente (5) und/oder die zweiten Festspannelemente (6) reversierbar in Bezug auf den Halterungsabschnitt (2) rund um eine Achse drehbar sind, die im Wesentlichen parallel zur Bewegungsrichtung (Y) verläuft.

7. Greifvorrichtung nach Anspruch 6, wobei ein jedes der ersten Festspannelemente (5) und/oder ein jedes der zweiten Festspannelemente (6) selektiv in Bezug auf den Halterungsabschnitt (2) rund um eine Achse, die im Wesentlichen parallel zur Bewegungsrichtung (Y) verläuft, drehbar ist.

8. Greifvorrichtung nach einem oder mehreren der vorhergehenden Ansprüche, wobei der erste Festspannabschnitt (3) und/oder die ersten Festspannelemente (5) und/oder der zweite Festspannabschnitt (4) und/oder die zweiten Festspannelemente (6) mindestens teilweise aus Aluminium und/oder einer Aluminium enthaltenden Legierung besteht/bestehen.

9. Greifvorrichtung nach einem oder mehreren der vorhergehenden Ansprüche, wobei der erste Festspannabschnitt (3) und/oder die ersten Festspannelemente (5) und/oder der zweite Festspannabschnitt (4) und/oder die zweiten Festspannelemente (6) mindestens teilweise aus einer Aluminiumlegierung der Reihe 7000, beispielsweise Ergal^{®}, besteht/bestehen.

10. Greifvorrichtung nach einem oder mehreren der vorhergehenden Ansprüche, wobei die ersten Festspannelemente (5) und/oder die zweiten Festspannelemente (6) Abschnitte mit erhöhtem Reibungswert umfassen, die auf dem Paket (P) aktivierbar sind.

11. Greifvorrichtung nach einem oder mehreren der vorhergehenden Ansprüche, umfassend Erkennungsmittel, die vorzugsweise mindestens einen Beschleunigungssensor und/oder einen Kraftsensor und/oder einen Abstandssensor und/oder eine Fotozelle umfassen, ausgelegt, um mindestens ein Signal zu generieren, das repräsentativ für mindestens einen Betriebsparameter der Greifvorrichtung (1) ist.

## Revendications

1. Dispositif de préhension pour au moins un paquet (P) de pâtes longues sèches, comprenant :
- une partie de support (2) adaptée pour relier ledit dispositif de préhension (1) à des moyens de mouvement pour déplacer au moins un paquet entre une pluralité de positions de fonctionnement ;
- au moins une première partie de blocage (3) et au moins une deuxième partie de blocage (4) pouvant être rapprochées et éloignées de manière réversible le long d'une direction de mouvement (Y) parallèle à un axe d'extension principal du paquet entre une position de préhension, dans laquelle ladite au moins une première partie de blocage (3) et au moins une deuxième partie de blocage (4) sont disposées à une première distance de manière à venir se mettre en butée contre des parties opposées de la tête du paquet pour contraindre le paquet au dispositif de préhension (1), et une position de libération, dans laquelle lesdites au moins une première partie de blocage (3) et au moins une deuxième partie de blocage (4) sont disposées à une deuxième distance plus grande que ladite première distance ;
dans lequel ladite première partie de blocage (3) et ladite deuxième partie de blocage (4) sont respectivement définies par une pluralité de premiers éléments de blocage (5) et de deuxièmes éléments de blocage (6), chacun desdits premiers éléments de blocage (5) étant disposé à l'opposé d'un deuxième élément de blocage respectif par rapport à ladite direction de mouvement (Y) ;
**caractérisé en ce que** lesdits premiers éléments de blocage (5) et/ou lesdits deuxièmes éléments de blocage (6) sont mobiles de manière réversible le long d'une direction (X) qui est transversale, de préférence perpendiculaire, à ladite direction de mouvement (Y) entre une configuration de rapprochement mutuel et une configuration d'éloignement mutuel.

2. Dispositif de préhension selon une ou plusieurs des revendications précédentes, comprenant des moyens de préhension pneumatiques pouvant être réversiblement activés sur le paquet pour le contraindre audit dispositif de préhension (1).

3. Dispositif de préhension selon une ou plusieurs des revendications précédentes, dans lequel lesdits premiers éléments de blocage (5) et/ou lesdits deuxièmes éléments de blocage (6) sont mobiles de manière réversible le long d'une direction de mouvement (Y) respective de manière mutuellement indépendante et/ou sélective.

4. Dispositif de préhension selon une ou plusieurs des revendications précédentes, dans lequel chacun desdits premiers éléments de blocage (5) et/ou chacun desdits deuxièmes éléments de blocage (6) est sélectivement rotatif par rapport à ladite partie de support (2) par rapport à un axe de rotation (R) respectif qui est transversal, de préférence perpendiculaire, à la direction de mouvement (Y) d'une manière réversible.

5. Dispositif de préhension selon une ou plusieurs des revendications précédentes, dans lequel chacun desdits premiers éléments de blocage (5) et/ou chacun desdits deuxièmes éléments de blocage (6) est sélectivement mobile le long de ladite direction (X).

6. Dispositif de préhension selon une ou plusieurs des revendications précédentes, dans lequel lesdits premiers éléments de blocage (5) et/ou lesdits deuxièmes éléments de blocage (6) sont réversibles en rotation par rapport à la partie de support (2) autour d'un axe essentiellement parallèle à ladite direction de mouvement (Y).

7. Dispositif de préhension selon la revendication 6, dans lequel chacun des premiers éléments de blocage (5) et/ou chacun des deuxièmes éléments de blocage (6) est sélectivement rotatif par rapport à ladite partie de support (2) autour d'un axe essentiellement parallèle à ladite direction de mouvement (Y).

8. Dispositif de préhension selon une ou plusieurs des revendications précédentes, dans lequel ladite première partie de blocage (3) et/ou lesdits premiers éléments de blocage (5) et/ou ladite deuxième partie de blocage (4) et/ou lesdits deuxièmes éléments de blocage (6) sont au moins partiellement en aluminium et/ou en alliage contenant de l'aluminium.

9. Dispositif de préhension selon une ou plusieurs des revendications précédentes, dans lequel ladite première partie de blocage (3) et/ou lesdits premiers éléments de blocage (5) et/ou ladite deuxième partie de blocage (4) et/ou lesdits deuxièmes éléments de blocage (6) sont au moins partiellement constitués d'un alliage d'aluminium de la série 7000, par exemple l'Ergal^{®}.

10. Dispositif de préhension selon une ou plusieurs des revendications précédentes, dans lequel lesdits premiers éléments de blocage (5) et/ou lesdits deuxièmes éléments de blocage (6) comprennent des parties à coefficient de frottement accru pouvant être activées sur le paquet (P).

11. Dispositif de préhension selon une ou plusieurs des revendications précédentes, comprenant des moyens de détection, de préférence comprenant au moins un capteur d'accélération et/ou un capteur de force et/ou un capteur de distance et/ou une photocellule, adaptés pour générer au moins un signal représentatif d'au moins un paramètre de fonctionnement dudit dispositif de préhension (1).
